# EUROPEAN PATENT APPLICATION

(11) **EP 1 932 762 A2**
(43) Date of publication of application: **18.06.2008**
(21) Application number: 07122434.9
(22) Date of filing: 05.12.2007
(51) Int. Cl.: B64G 1/42, H02K 7/02

(54) **Electrically redundant spacecraft power and attitude control system**

(30) Priority: 12.12.2006 US 637290
(71) Applicant: Honeywell International Inc., Morristown, NJ 07962 (US)
(72) Inventor: Potter, Calvin C., Mesa, AZ 85206 (US); Corcino, David, Gilbert, AZ 85296 (US); Wingett, Paul T., Mesa, AZ 85202 (US); Hanlon, Casey, Queen Creek, AZ 85242 (US)
(74) Representative: Buckley, Guy Julian

(57) **Abstract**

An energy storage flywheel system for a spacecraft (200) is implemented with an electronically redundant power and attitude control system (100). In particular, the system includes a plurality of flywheels (106), and a multi-channel processing module (302) and a multi-channel power control module (304) associated with each flywheel. Each multi-channel processing module (302) includes a plurality of controllers that may be operated in either an active or a standby mode, and each multi-channel power control module (304) includes a plurality of power control circuits that may also be operated in either an active or standby mode.

## Description

### STATEMENT REGARDING FEDERALLY SPONSORED RESEARCH OR DEVELOPMENT

This invention was made with Government support under agreement number F29601-01-2-0046 awarded by the Air Force Research Laboratory. The Government has certain rights in this invention.

### TECHNICAL FIELD

The present invention relates to energy storage flywheel systems and, more particularly, to an electronically redundant energy storage flywheel system control system for spacecraft power and attitude control.

### BACKGROUND

Many satellites and other spacecraft, as well as some terrestrial stationary and vehicle applications, such as seagoing vessels, can include one or more energy storage flywheel systems to provide both a backup power source and to provide attitude control for the vehicle. In such systems, each flywheel system is controlled and regulated to balance the electrical demand in the vehicle electrical distribution system, and may also be controlled in response to programmed or remote attitude (or torque) commands received by a main controller in the vehicle.

Many energy storage flywheel systems include one or more components that are rotationally supported within a housing assembly. These components, which may be referred to as the rotating group, include, for example, an energy storage flywheel, a motor/generator, and a shaft. In particular, the energy storage flywheel and motor/generator may be mounted on the shaft, which may in turn be rotationally supported in the housing assembly via one or more bearing assemblies. In many instances, the shaft is rotationally supported using one or more primary bearing assemblies, and one or more secondary, or back-up, bearing assemblies. For example, in many satellite and spacecraft applications, the flywheel system may include one or more magnetic bearing assemblies that function as the primary bearing assemblies, and one or more mechanical bearing assemblies that function as the secondary bearing assemblies. Typically, the primary bearing assemblies are used to rotationally support the rotating group, while the secondary bearing assemblies are otherwise disengaged from the rotating group. If one or more of the primary bearing assemblies is deactivated due, for example, to a malfunction, or otherwise becomes inoperable to rotationally support the rotating group, the secondary bearing assemblies will then engage, and thereby rotationally support, the rotating group.

It is postulated that one or more of the above-mentioned components, and/or the electrical and electronic control systems associated with these components, could become inoperable during energy storage flywheel system operation. In such instances, the entire energy storage flywheel system could become inoperable. Thus, it is desirable to provide sufficient redundancy within an energy storage flywheel system, most notably for space applications, to reduce the likelihood of system inoperability. Unfortunately, most redundancy schemes, such as dual motor/generators, and/or dual primary bearings, and/or dual electrical and electronic control systems, etc., can undesirably increase overall system weight.

Hence, there is a need for an energy storage flywheel system for spacecraft applications that is both electrically and electronically redundant, yet does not significantly increase overall system and spacecraft weight. The present invention addresses at least this need.

### BRIEF SUMMARY

The present invention provides an electronically redundant energy storage flywheel system for spacecraft power and attitude control. In one embodiment, and by way of example only, an energy storage flywheel system includes a shaft, a flywheel assembly, a plurality of magnetic bearings, a motor/generator, and a flywheel control module. The flywheel assembly is mounted on the shaft. Each magnetic bearing assembly includes a primary actuator coil and a secondary actuator coil, and each actuator coil is adapted to be selectively energized and deenergized, and is configured, when energized, to rotationally mount the flywheel assembly in a non-contact manner. The motor/generator is coupled to the energy storage flywheel and is configured to operate in either a motor mode or a generate mode. The motor/generator includes a rotor and a stator, and the stator includes a primary stator coil and a secondary stator coil. The flywheel control module is configured to control at least the magnetic bearing assemblies and the motor/generator, and includes a multi-channel processing module and a multi-channel power control module. The multi-channel processing module includes at least a primary processing channel and a secondary processing channel. Each processing channel is configured to selectively supply at least magnetic bearing assembly power control commands and motor/generator power control commands. The multi-channel power control module is in operable communication with the multi-channel processing module and includes at least a primary power control channel and a secondary power control channel. Each power control channel is coupled to receive at least the magnetic bearing power control commands and the motor/generator power control commands and is operable, upon receipt thereof, to selectively supply magnetic bearing actuation power to either the primary actuator coil or the secondary actuator coil of each magnetic bearing assembly and selectively supply power to, or draw power from, either the primary stator coil set or the secondary stator coil set.

Other independent features and advantages of the preferred energy storage flywheel control system will become apparent from the following detailed description, taken in conjunction with the accompanying drawings which illustrate, by way of example, the principles of the invention.

### BRIEF DESCRIPTION OF THE DRAWINGS

FIG. 1 is a simplified schematic representation of an exemplary integrated power and attitude control system; and

FIG. 2 is a plan view of an exemplary physical embodiment of a spacecraft that may include the system of FIG. 1;

FIG. 3 is a functional block diagram of an exemplary embodiment of one energy storage flywheel system that may be used in the system of FIG. 1;

FIGS. 4 and 5 are a plan and a cross section view, respectively, of a physical embodiment of the energy storage flywheel system of FIG. 3;

FIGS. 6-8 depict various configurations for implementing redundancy in the energy storage flywheel system of FIG. 3.

### DETAILED DESCRIPTION OF A PREFERRED EMBODIMENT

Before proceeding with a detailed description, it is to be appreciated that the described embodiment is not limited to use in conjunction with a spacecraft. Thus, although the present embodiment is, for convenience of explanation, depicted and described as being implemented in a satellite, it will be appreciated that it can be implemented in other systems and environments, both terrestrial and extraterrestrial.

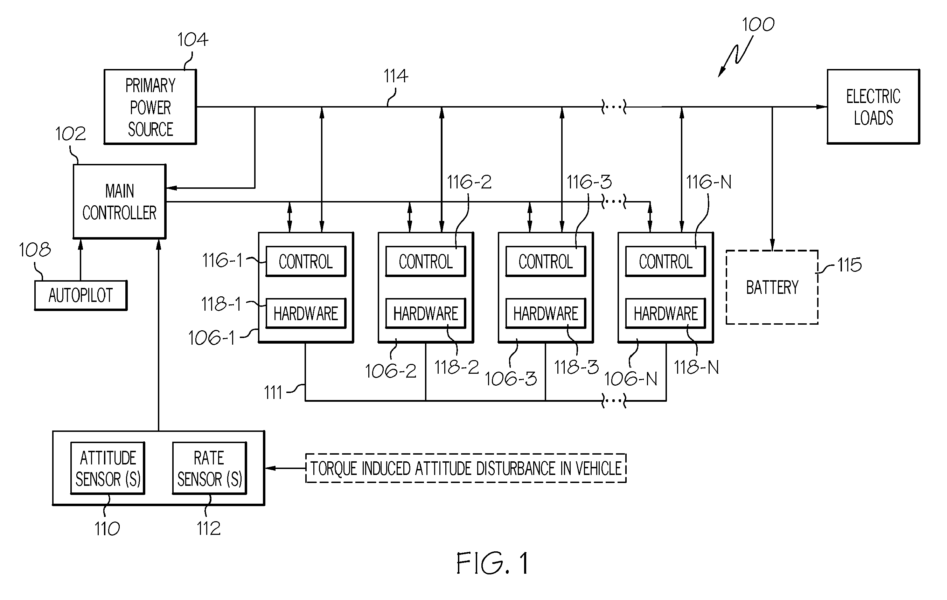

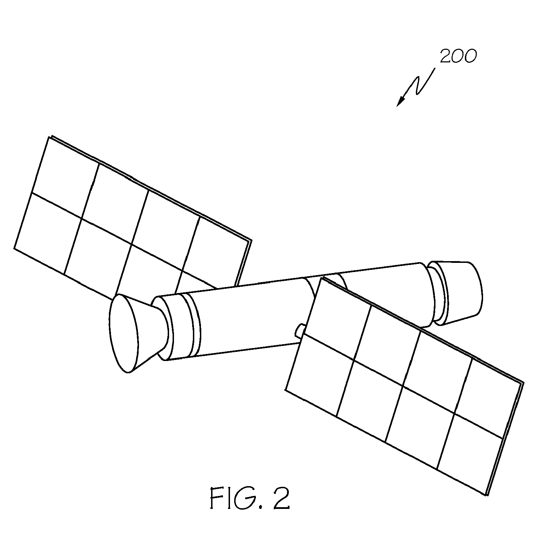

Turning now to the description and with reference first to FIG. 1, a functional block diagram of an exemplary integrated power and attitude control system 100 for a spacecraft is shown. The system 100 includes a main controller 102, a primary power source 104, and a plurality of flywheel systems 106 (106-1, 106-2, 106-3, ... 106-N). A plan view of an exemplary physical embodiment of a spacecraft 200 that may use the system 100 is illustrated in FIG. 2.

The main controller 102 receives attitude commands (or torque commands) from, for example, an earthbound station or its onboard autopilot 108, and monitors the electrical distribution system 114, and appropriately controls the operation of the flywheel systems 106. In response to the torque commands, the flywheel systems 106 are controlled to induce appropriate attitude disturbances in the spacecraft, and thereby control spacecraft attitude. In addition, depending upon the state of the electrical distribution system 114, the flywheel systems 106 are controlled to either supply electrical energy to, or draw electrical energy from, the electrical distribution system. One or more spacecraft dynamic sensors, such as one or more attitude sensors 110 and one or more rate sensors 112, sense spacecraft attitude and attitude rate-of-change, respectively, and supply feedback signals representative thereof to the main controller 102. A detailed description of the main controller 102 and the process it implements to control power and attitude is not needed to enable or describe the claimed invention and, therefore, will not be provided.

The primary power source 104, as its name connotes, is the primary source of electrical power to the electrical distribution system 114. In the depicted embodiment, in which the system 100 is implemented in a spacecraft, the primary power source 104 is one or more solar panels, each of which includes an array of solar cells to convert light energy into electrical energy. The solar panels 104 may be attached to the spacecraft itself or to fixed or moveable structures that extend from the spacecraft. When the spacecraft 200 is positioned such that it does not receive sunlight, such as, for example, when it is in the Earth's shadow, a backup electrical power source is needed. As was alluded to above, in addition to providing attitude control, the flywheel systems 106 also function as a backup power source. The flywheel systems 106 may also provide electrical power if the power demanded by the electrical loads exceeds the capacity of the primary power source 104. It will be appreciated that another backup power source, such as a battery 115 (shown in phantom in FIG. 1), may also be provided.

The system 100 includes N number of energy storage flywheel systems 106 (106-1, 106-2, 106-3, ... 1-6-N). The system 100 is preferably configured so that some of the flywheel systems 106 are active, while one or more of the remaining flywheel systems 106 is in a standby, inactivated state. Thus, the system 100 is at least single fault tolerant. The number of flywheel systems 106 that are active may vary, depending on system requirements. In a particular preferred embodiment, four flywheel systems 106 are active and the remaining are inactive.

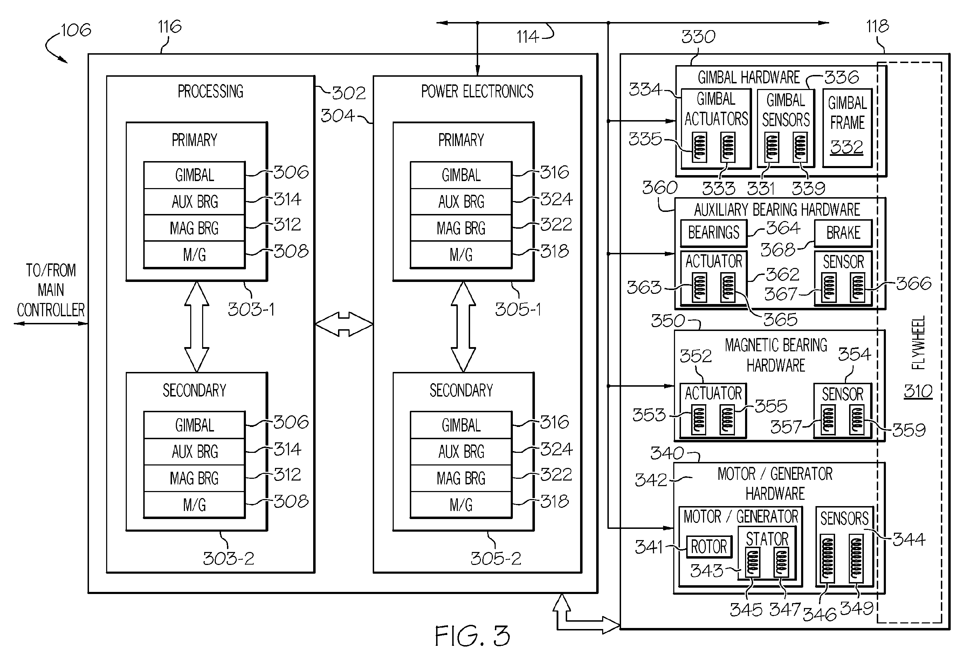

The flywheel systems 106 each include a flywheel control module 116 (116-1, 116-2, 116-3, ... 116-N) and flywheel hardware 118 (118-1, 118-2, 118-3, .. . 118-N). The flywheel control modules 116 are each in operable communication with the main controller 102 and, at least in the depicted embodiment, are in communication with one another via a data bus 111. The main controller 102, as was noted above, supplies attitude control commands to the each of the flywheel control modules 116. In turn, the flywheel control modules 116 control the relative attitudes and angular velocities of the associated flywheel hardware 118 to effect attitude control of the spacecraft 200. The flywheel control modules 116 also respond to commands from the main controller 102 to control the operation of the associated flywheel hardware 118 in either a motor mode or a generator mode, and the rotational acceleration of the associated flywheel hardware 118 in each mode. The flywheel control modules 116 also preferably monitor various parameters of the associated flywheel hardware 118, and supply representative signals to the main controller 102. A block diagram of an exemplary embodiment of one flywheel system 106 is illustrated in FIG. 3, and will now be discussed in detail.

In the depicted embodiment, the flywheel control modules 116 each include a multi-channel processing module 302 and a multi-channel power electronics module 304. The flywheel hardware 118 includes an energy storage flywheel assembly 310, gimbal hardware 330, motor/generator hardware 340, magnetic bearing hardware 350, and auxiliary bearing hardware 360. Particular preferred embodiments of each of these portions of the flywheel control modules 116 and the flywheel hardware 118 will be now be described in more detail.

The multi-channel processing module 302 is implemented with a plurality of independent processing channels 303. In the depicted embodiment, the multi-channel processing module 302 and the multi-channel power control module 304 are each implemented with two independent channels. More specifically, the multi-channel processing module 302 is implemented with a primary processing channel 303-1 and a secondary processing channel 303-2, and the multi-channel power control module 304 is implemented with a primary power control channel 305-1 and a secondary power control channel 305-2. It will be appreciated, however, that the multi-channel processing module 302 and multi-channel power control module 304 could either, or both, be implemented with more than two independent channels (e.g., 303-1, 303-2, ... 303-N and 305-1, 305-2, ... 305-N, respectively), if needed or desired. As will be described further below, at least portions of one of the channels 303, 305 in each module 302, 304 is operating in an active mode and controlling operations of the flywheel hardware 118, while at least portions of the other channel (or channels, as the case may be) 303, 305 is (or are) operating in a standby mode, to thereby implement suitable electrical and electronic redundancy for the flywheel system 106.

The processing channels 303 are each configured to implement a plurality of low level digital controllers, namely a low level digital gimbal controller 306, a low level motor/generator controller 308, a low level magnetic bearing controller 312, and a low level auxiliary bearing controller 314. Similarly, each of the power control channels 305 is configured to implement a plurality of power electronics circuits, namely a gimbal power electronics circuit 316, a motor/generator power electronics circuit 318, a magnetic bearing power electronics circuit 322, and an auxiliary bearing power electronics circuit 324. It will be appreciated that each processing channel 303 may be configured to implement the depicted low level digital controllers 306-314 in accordance with any one of numerous techniques. For example, each processing channel 303 could be configured such that a single processing device, such as a programmable processor or a digital signal processor, implements all four low level digital controllers 306-314. Alternatively, each processing channel 303 could be configured with four separate processing devices, with each processing device implementing one of the low level digital controllers 306-312. Similarly, it will be appreciated that each power control channel 305 may also implement the depicted power electronics circuits 316-324 in accordance with any one of numerous techniques. Preferably, however, each power control channel 305 is configured with four separate power electronics circuits 316-324.

As was alluded to above, the processing module 302 and the power electronics module 304 are additionally configured to implement suitable redundancy for its flywheel system 106. It will be appreciated that the manner in which the processing and power electronics modules 302, 304 implement this redundancy may vary. For example, the processing module 302 in the depicted embodiment may be configured such that one processing channel, such as the primary processing channel 303-1, is in the active mode, while the other processing channel, such as the secondary processing channel 303-2, is in the standby mode. With this configuration, all of the low level digital controllers 306-314 in the primary processing channel 303-1 and all of the low level digital controllers 306-314 in the secondary processing channel 303-2 will either be in the active mode or the standby mode. More specifically, if all of the low level digital controllers 306-314 in the primary processing channel 306-314 are in the active mode, then all of the low level digital controllers 306-314 in the secondary processing channel 303-2 will be in the standby mode. If, however, the main controller 102 determines that one or more of the low level digital controllers 306-314 in the primary processing channel 303-1 is faulty, or otherwise inoperable, the main controller 102 will command the processing circuit 302 to switch all of the low level digital controllers 306-314 in the primary processing channel 303-1 to the standby mode, and to switch all of the low level digital controllers 306-314 in the secondary processing channel 303-2 to the active mode.

In another implementation, not all of the low level digital controllers 306-314 in each processing channel 303 will always be in the same mode. For example, assume all of the low level digital controllers 306-314 in the primary processing channel 303-1 are initially in the active mode, and all of the low level digital controllers 306-314 in the secondary processing channel 303-2 are initially in the standby mode, and the main controller determines, for example, that the active low level digital gimbal controller 306 is faulty, or otherwise inoperable. In this alternate embodiment, the processing circuit 302 will be commanded to switch only the low level digital gimbal controller 306 in the primary processing channel 303-1 to the standby mode, and only the low level digital gimbal controller 306 in the secondary processing channel 303-2 to the active mode. All of the other low level digital controllers 308-314 in both the primary and secondary processing channels 303-1, 303-2 will remain in the initial active or standby states.

It will be appreciated that the power electronics module 304 may similarly be configured in accordance with either of the above-described redundancy implementations. That is, the power electronics module 304 could be configured such that all of the power electronics circuits 316-324 in each power control channel 305 are always in the same mode, or such that the power electronics circuits 316-324 in each power control channel 305 could, if needed or desired, be in different modes. For completeness, a brief description of the functions of each of the low level digital controllers 306-314, each of the power electronics circuits 316-324, and the associated flywheel hardware 118 will now be provided.

The low level digital gimbal controllers 306 are each configured to receive gimbal angle velocity commands from the main controller 102 and, in response, to generate appropriate gimbal power control commands. It will be appreciated, however, that during flywheel system operation, only the active low level digital gimbal controller 306 will generate gimbal power commands. The gimbal power commands generated by the active low level digital gimbal controller 306 are supplied to the gimbal power electronics circuits 316. The gimbal power electronics circuits 316 are each configured, when active, to respond to the gimbal power commands and selectively energize at least portions of the gimbal hardware 330 (described further below). The low level gimbal controllers 306 and gimbal power electronics circuits 316 also receive various feedback signals from the gimbal hardware 330. These feedback signals are used, in the active low level digital controller 306 and the active power electronics circuit 316, to effect attitude control, and to determine operability of the gimbal hardware 330. The active low level digital gimbal controller 306 and the active gimbal power electronics circuit 316 also supply these feedback signals, as well as signals representative of their own health, to the main controller 102.

In the depicted embodiment, the gimbal hardware 330 includes one or more gimbal frames 332, one or more gimbal actuators 334, and one or more gimbal sensors 336. The flywheel assembly 310 is rotationally mounted in the gimbal frame 332 about a gimbal axis. The gimbal axis is perpendicular to the spin axis of the energy storage flywheel assembly 310. The gimbal actuator 334 is coupled to the gimbal frame 332, and is also coupled between the electrical distribution system 114 and the multi-channel power electronics module 304. The gimbal actuator 334 is preferably implemented as an electromechanical actuator, and includes at least a primary drive coil 333 and a secondary drive coil 335. The primary and secondary drive coils 333, 335 are each coupled to be selectively energized and are operable, upon being energized, to cause the gimbal actuator 334 to move the flywheel assembly 310 relative to the gimbal frame 332.

The drive coil 333, 335 that is selectively energized is based, at least in part, on feedback signals supplied to the active low level digital gimbal controller 306 and the active gimbal power electronics circuit 316. More specifically, the primary drive coil 333, for example, is normally configured to be selectively energized. However, if the active low level digital gimbal controller 306 and//or active gimbal power electronics circuit 316 determines, based at least in part on the feedback signals supplied from the gimbal hardware 330, that the primary drive coil 333 is inoperable, the flywheel system 106 will automatically reconfigure itself so that the secondary drive coil 335 is controlled and selectively energized by the active low level digital gimbal controller 306 and active gimbal power electronics circuit 316, respectively.

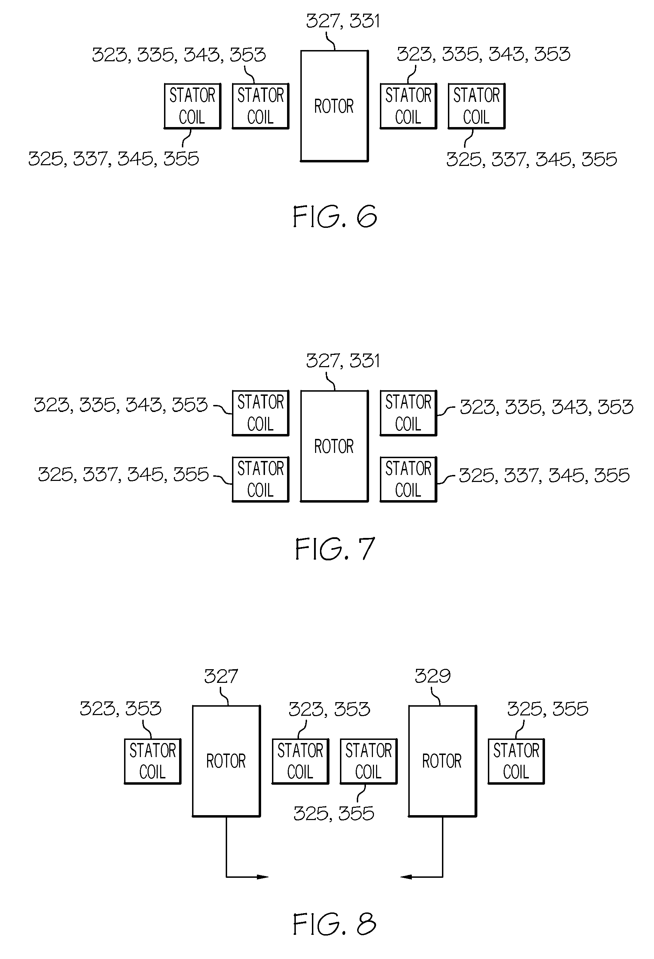

It will be appreciated that the gimbal actuator 334 may be implemented in accordance with any one of numerous configurations. For example, the gimbal actuator 334 may be implemented such that the primary and second drive coils 333, 335 are both associated with a single rotor 337. In such instances, as is depicted in FIGS. 6 and 7, the drive coils 333, 335 could be either radially or axially displaced from each other. Alternatively, as depicted in FIG. 8, the gimbal actuator 334 could be implemented such that each drive coil 333, 335 is associated with its own individual rotor 337, 339.

As is generally known, attitude control in a spacecraft may be implemented by changing the gimbal angles at certain rates (e.g., angular velocities). Thus, in response to the commands received from the main controller 102, the active gimbal controller 306 supplies appropriate gimbal actuator power control commands to the active gimbal actuator power electronics circuit 316, which in turn selectively energizes, via the electrical distribution system 114 either the gimbal actuator primary 333 or secondary 335 coils. In response, the gimbal actuators 334 appropriately position the flywheel assembly 310 with respect to the gimbal frame 332 at the appropriate angular velocities. The gimbal sensors 336, which preferably include one or more primary sensors 331 and one or more secondary sensors 339, are configured to sense at least the position and rate of the flywheel assembly 310 with respect to the gimbal frame 332, and supply position and rate feedback signals to the active low level digital gimbal controller 306 and the active gimbal power electronics circuit 316.

The low level digital motor/generator controllers 308 are each coupled to receive a signal representative of the bus voltage of the electrical distribution system 114 and are each configured, in response thereto, to configure the motor/generator hardware 340 to operate in either a motor mode or a generator mode. It will be appreciated, however, that during flywheel system operation, only the active low level digital motor/generator controller 308 will control motor/generator hardware configuration. The low level digital motor/generator controllers 308 are also coupled to receive commands from the main controller 102 and, when active, are configured to be responsive to these commands to generate motor/generator power control commands. The motor/generator power control commands generated by the active low level digital motor/generator controller 308 are supplied to each of the motor/generator power control circuits 318. The motor/generator power control circuits 318 are each configured, when active, to selectively energize, and control the rotational acceleration of, the motor/generator hardware 340 and thus the flywheel assembly 310. To do so, the low level digital motor/generator controllers 308 are each configured, when active, to selectively implement either a motor control law or a generator control law. The low level digital motor/generator controllers 308 and motor/generator power control circuits 318 also receive various feedback signals from the motor/generator hardware 340. At least some of the feedback signals are representative of the motor/generator hardware 340 response to the supplied control signals. The active low level digital motor/generator controller 308 and the active motor/generator power electronics circuit 318 also supply one or more of the feedback signals it receives from the motor/generator hardware 340, as well as signals representative of their own health, to the main controller 102.

The motor/generator hardware 340 includes a motor/generator 342 and one or more sensors 344. The motor/generator 342 may be any one of numerous motor/generator sets known now, or in the future, and includes at least a main rotor 341 and a stator 343. The rotor 341 is preferably implemented as a permanent magnet rotor, and is coupled to the rotor of the flywheel assembly 310. The stator 343 includes at least a primary stator coil 345 and a secondary stator coil 347. The motor/generator primary and secondary stator coils 345, 347, similar to the gimbal actuator 334, and as depicted in FIGS. 6 and 7, could be either radially or axially displaced from each other.

The sensors 344 preferably include primary 346 and secondary 349 temperature sensors and primary a secondary commutation sensors. When the bus voltage of the electrical distribution system 114 is sufficiently high, the active low level digital motor/generator controller 308 and the active motor/generator power control circuit 318 control the motor/generator 342 in a motor mode. During operation in the motor mode, the motor/generator 342 spins up the flywheel assembly 310, to store rotational kinetic energy. Conversely, when the bus voltage of the electrical distribution system 114 drops to some predetermined magnitude, the active low level digital motor/generator controller 308 and the active motor/generator power control circuit 318 control the motor/generator 342 in a generator mode. During its operation in the generator mode, the motor/generator 342 spins down the flywheel assembly 310, converting the flywheel's stored rotational kinetic energy to electrical energy. As was previously discussed, changes in the rotational speed of the flywheel assembly 310 can impact the attitude of the spacecraft. Thus, in both the motor mode and the generator mode, the flywheel assembly 310 is spun up, or spun down, to a rotational velocity at an acceleration commanded by the main controller 102.

No matter which mode the motor/generator 342 is operating in, either the primary stator coil 345 or the secondary stator coil 347 are supplying power to, or receiving power from, the electrical distribution system 114. Preferably, the active low level digital motor/generator controller 308 and the active motor/generator power control circuit 318 determine the particular stator coil 345, 347 that is supplying power to, or receiving power from, the electrical distribution system 114. In particular, the flywheel system 106 is configured such that the primary stator coil 345 normally supplies power to, or receives power from, the electrical distribution system 114. However, if the active low level digital motor/generator controller 308 and/or the active motor/generator power control circuit 318 determine, based at least in part on feedback signals from the motor/generator hardware 340, that the primary stator coil 345 is inoperable, the flywheel system 106 will automatically configure the motor/generator 342 such that secondary stator coil 347 supplies power to, or receives power from, the electrical distribution system 114.

The low level digital magnetic bearing controllers 312 are each configured to receive one or more commands from the main controller 102 and, in response, to generate magnetic bearing power control commands. It will be appreciated, however, that during flywheel system operation, only the active low level digital magnetic bearing controller 312 will generate magnetic bearing power control commands. The magnetic bearing power commands generated by the active low level digital magnetic bearing controller 312 are supplied to the magnetic bearing power electronics circuits 322. The magnetic bearing power electronics circuits 322 are each configured, when active, to respond to the magnetic bearing power commands and selectively energize at least portions of the magnetic bearing hardware 350. The low level magnetic bearing controllers 312 and the magnetic bearing power electronics circuits 322 also receive various feedback signals from the magnetic bearing hardware 350. These feedback signals are used, in the active low level digital controller 314 and the active power electronics circuit 322, to effect proper magnetic bearing control, and to determine operability of the magnetic bearing hardware 350. The active low level digital magnetic bearing controller 312 and the active magnetic bearing power electronics circuit 322 also supply these feedback signals, as well as signals representative of their own health, to the main controller 102.

The magnetic bearing hardware 350 functions to rotationally support or levitate, in non-contact fashion, the energy storage flywheel assembly 310, and is the primary bearing system for the energy storage flywheel assembly 310. In the depicted embodiment, the magnetic bearing hardware 350 implements active magnetic bearings, and includes electromagnetic actuators 352 and a plurality of sensors 354 such as, for example, primary 357 and secondary 359 position sensors, temperature sensors, and speed sensors. The position sensors 354 sense the position of the flywheel rotor (not illustrated) and supply appropriate position signals to the active low level digital magnetic bearing controller 312 and the active magnetic bearing power electronics circuit 322. The active low level digital magnetic bearing controller 312 and the active magnetic bearing power electronics circuit 322 control the supply of current to the electromagnetic actuators 352, which in turn generate magnetic forces of the appropriate magnitude to appropriately position the flywheel rotor. Although active magnetic bearings are described as being implemented in the system shown in FIG. 3, it will be appreciated that the magnetic bearing hardware 350 could be configured to implement passive magnetic bearings. Alternatively, other types of bearing assemblies could be used to implement the primary bearing assemblies such as, for example, non-magnetic rolling element bearings.

The magnetic bearing actuator 352, similar to the gimbal actuator 334 and motor/generator 342, is redundantly configured. In particular, the magnetic bearing actuator 352 includes both a primary actuator coil 353 and a secondary actuator coil 355. The primary and secondary actuator coils 353, 355 are each coupled to be selectively energized via the active magnetic bearing power electronics circuit 322. The actuator coil 353, 355 that is selectively energized is based, at least in part, on feedback signals supplied to the active low level digital magnetic bearing controller 312 and the active magnetic bearing power electronics circuit 322. More specifically, the primary actuator coil 353, for example, is normally configured to be selectively energized. However, if the active low level digital magnetic bearing controller 312 and/or the active magnetic bearing power electronics circuit 322 determines, based at least in part on feedback signals supplied from the magnetic bearing hardware 350, that the primary actuator coil 353 is inoperable, the flywheel system 106 will automatically reconfigure itself so that the secondary actuator coil 355 is controlled and selectively energized by the active low level digital magnetic bearing controller 312 and the active magnetic bearing power electronics circuit 322. As FIGS. 6 and 7 further depict, it will be appreciated that the magnetic bearing actuator primary and secondary coils 353, 355, similar to the gimbal actuator 334 and motor/generator 342, could be either radially or axially displaced from each other.

The low level digital auxiliary bearing controllers 314 are each configured to receive various signals representative of magnetic bearing hardware 350 operability and various feedback signals from the auxiliary bearing hardware 360. In response to these signals, the active low level digital auxiliary bearing controller 314 supplies auxiliary bearing power commands to the active auxiliary bearing power control circuit 324. In particular, the active low level digital auxiliary bearing controller 314 receives a feedback signal representative of the position of the auxiliary bearing hardware 360, and may additionally receive a signal representative of the bus voltage of the electrical distribution system 114. In response to these signals, the active low level digital auxiliary bearing controller 314 supplies auxiliary bearing power commands to the active auxiliary bearing power control circuit 324. The auxiliary bearing power control circuits 324 are each configured, when active, to respond to the auxiliary bearing power commands and selectively energize at least portions of the auxiliary bearing hardware 360.

The auxiliary bearing hardware 360 is used to rotationally support the energy storage flywheel assembly 310 when the magnetic bearing hardware 350 is inoperable, or is otherwise not capable of properly doing so. The auxiliary bearing hardware 360 includes an actuator assembly 362, one or more auxiliary (or secondary) bearing assemblies 364, a primary position sensor 367, a secondary position sensor 366, and a brake assembly 368. The actuator assembly 362, in response to being appropriately energized, moves the auxiliary bearing assemblies 364 to either an engage position or a disengage position. In the disengage position, which is the normal position of the auxiliary bearing assemblies 364, the auxiliary bearing assemblies 364 are disengaged from, and do not rotationally support, the flywheel assembly 310. Rather, the flywheel assembly 310 is rotationally supported by the magnetic bearing hardware 350. Conversely, in the engage position the auxiliary bearing assemblies 364 engage, and rotationally support, the flywheel assembly 310.

The auxiliary bearing actuator assembly 362, similar to the gimbal actuators 334, the motor/generators 342, and the magnetic bearing actuators 352, are configured with suitable redundancy. In particular, the auxiliary bearing actuator assembly 362 is preferably implemented as an electromechanical actuator, and includes at least a primary drive coil 363 and a secondary drive coil 365. The primary and secondary drive coils 363, 365 are each coupled to be selectively energized. The drive coil 363, 365 that is selectively energized is based, at least in part, on feedback signals supplied to the active low level digital auxiliary bearing controller 314 and the active auxiliary bearing power control circuit 324. More specifically, the primary drive coil 363, for example, is normally configured to be selectively energized. However, if the active low level digital auxiliary bearing controller 314 and/or the active auxiliary bearing power control circuit 324 determines, based at least in part on feedback signals supplied from the auxiliary bearing hardware 360, that the primary drive coil 363 is inoperable, the flywheel system 106 will automatically reconfigure itself so that the secondary drive coil 365 is controlled and selectively energized by the active low level digital auxiliary bearing controller 314 and the active auxiliary bearing power control circuit 324.

It will be appreciated that the auxiliary bearing actuator assembly 362 may be implemented in accordance with any one of numerous configurations. For example, the auxiliary bearing actuator assembly 362 may be implemented similar to the gimbal actuator 334, such that the primary and secondare drive coils 363, 365 are both associated with a single rotor 327. Moreover, as is depicted in FIGS. 6 and 7, the drive coils 363, 365 could be either radially or axially displaced from each other or, as depicted in FIG. 8, each drive coil 363, 365 could alternatively be associated with its own individual rotor 327, 329.

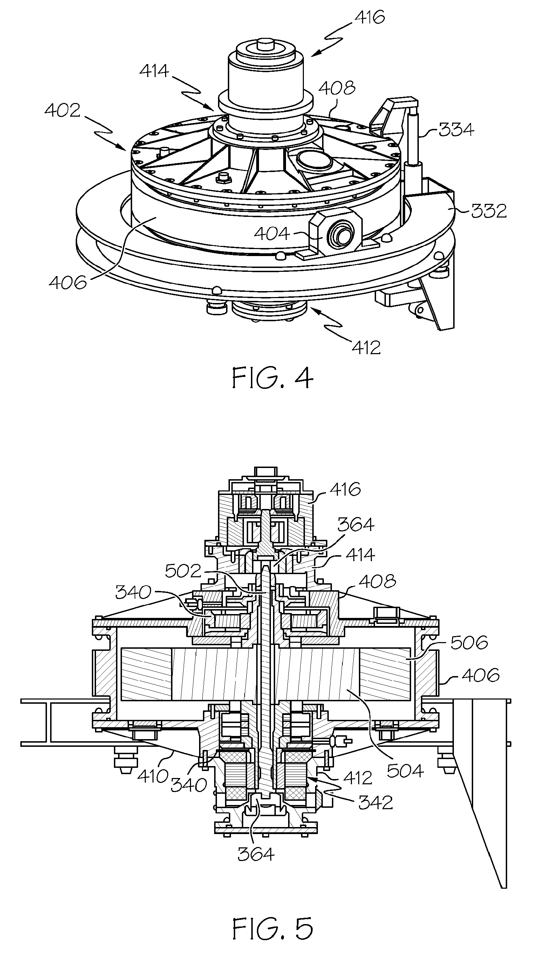

For completeness, reference should now be made to FIGS. 4 and 5, which depict an exemplary physical embodiment of an energy storage flywheel system 106. As depicted in these figures, the exemplary flywheel system 106 preferably includes a housing assembly 402, which is rotationally mounted in the gimbal frame 332 via two gimbal bearings 404 (only one shown). A single gimbal actuator 334 is mounted on the gimbal frame 332 and, as was noted above, is controlled and selectively energized (not shown in FIGS. 4 and 5) to position the housing assembly 402 at the appropriate angular velocities, to thereby effect attitude control.

The housing assembly 402 includes a central section 406, two end sections 408 and 410, a motor/generator housing 412, an auxiliary bearing housing 414, and an auxiliary motor housing 416. Although the housing assembly 402 is depicted as being constructed of numerous sections that are coupled together, it will be appreciated that it could be formed as an integral structure. In any event, the motor/generator housing 412 is coupled to the housing assembly second end section 410, the auxiliary bearing housing 414 is coupled to the housing assembly first end section 408, and the the auxiliary motor housing 416 is coupled to the auxiliary bearing housing 414.

The motor/generator 342 stator is mounted in the motor/generator housing 412 and the motor/generator 342 rotor is coupled to the flywheel assembly 310. The flywheel assembly 310, as shown more particularly in FIG. 5, includes a shaft assembly 502, a hub 504, and a flywheel rim 506. The shaft assembly 502 is rotationally mounted in the housing assembly 402 via either two sets of the magnetic bearing hardware 340 or two auxiliary bearing assemblies 364. The hub 504 is preferably constructed of a high-strength metal alloy, and is mounted on the shaft assembly 502. The hub 504 may be constructed in any one of numerous configurations including, for example, a solid configuration, a spoke-type configuration, or a combination thereof. The flywheel rim 506 is mounted on, and surrounds, the hub 504, and is preferably constructed of a material having a high strength-to-density ratio such as, for example, filament wound carbon fiber.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. An energy storage flywheel system (106), comprising:
a shaft;
a flywheel assembly (310) mounted on the shaft;
a plurality of magnetic bearing assemblies (350), each magnetic bearing assembly including a primary actuator coil (353) and a secondary actuator coil (355), each actuator coil adapted to be selectively energized and deenergized, and configured, when energized, to rotationally mount the flywheel assembly (310) in a non-contact manner;
a motor/generator (342) coupled to the flywheel assembly (310) and configured to operate in either a motor mode or a generate mode, the motor/generator (342) including a rotor (341) and a stator (343), the stator (343) including a primary stator coil (345) and a secondary stator coil (347); and
a flywheel control module (116) configured to control at least the magnetic bearing assemblies (350) and the motor/generator (342), the flywheel control module (116) including:
a multi-channel processing module (302) including at least a primary processing channel (303-1) and a secondary processing channel (303-2), each processing channel configured to selectively supply at least magnetic bearing assembly power control commands and motor/generator power control commands, and
a multi-channel power control module (304) in operable communication with the multi-channel processing module (302) and including at least a primary power control channel (305-1) and a secondary power control channel (305-2), each power control channel coupled to receive at least the magnetic bearing power control commands and the motor/generator power control commands and operable, upon receipt thereof, to (i) selectively supply magnetic bearing actuation power to either the primary actuator coil or the secondary actuator coil of each magnetic bearing assembly and (ii) selectively supply power to, or draw power from, either the primary stator coil set or the secondary stator coil set.

2. The system (100) of Claim 1, wherein:
each processing channel (303) includes at least (i) a low level digital magnetic bearing controller (312) configured to selectively supply the magnetic bearing power control commands, and (ii) a low level digital motor/generator controller (308) configured to selectively supply the motor/generator power control commands; and
each power control channel (305) includes at least (i) a magnetic bearing power control circuit (3220 responsive to the magnetic bearing power control commands to selectively supply the magnetic bearing actuation power, and (ii) a motor/generator power control power control circuit (318) responsive to the motor/generator power control commands to selectively supply power to, or draw power from, either the primary stator coil or the secondary stator coil.

3. The system (100) of Claim 2, wherein:
the multi-channel processing module (302) is configured such that each processing channel (303) is at least partially in either an active mode or a standby mode; and
the multi-channel power control module (304) is configured such that each power control channel (305) is at least partially in either an active mode or a standby mode.

4. The system (100) of Claim 3, wherein:
one of the low level digital magnetic bearing controllers (312) and one of the low level digital motor/generator controllers (308) in each processing channel (303) is in the active mode; and
one of the magnetic bearing power control circuits (322) and one of the motor/generator power control circuits (318) in each power control channel (305) is in the active mode.

5. The system (100) of Claim 1, further comprising:
a plurality of secondary bearing assemblies (364), each secondary bearing assembly configured to selectively rotationally support the shaft;
a secondary bearing actuator assembly (362) coupled to one or more of the secondary bearing assemblies (364), the secondary bearing actuator assembly (362) including a primary drive coil (363) and a secondary drive coil (365), each secondary bearing actuator assembly drive coil adapted to be selectively energized and deenergized, and configured, when energized, to cause the secondary bearing actuator assembly (362) to move the one or more secondary bearing assemblies (364) to one of (i) an engage position, in which each secondary bearing assembly rotationally supports the shaft, and (ii) a disengage position, in which each secondary bearing assembly does not rotationally supports the shaft,
wherein:
each processing channel (303) is further configured to selectively supply at least secondary bearing assembly power control commands, and
each power control channel (305) is further coupled to receive the secondary bearing power control commands and is further operable, upon receipt thereof, to selectively energize either the primary drive coil or the secondary drive coil of the secondary bearing actuator.

6. The system (100) of Claim 5, wherein:
each processing channel (303) includes at least (i) a low level digital magnetic bearing controller (312) configured to selectively supply the magnetic bearing power control commands, (ii) a low level digital motor/generator controller (308) configured to selectively supply the motor/generator power control commands, and (iii) a low level digital secondary bearing controller (314) configured to selectively supply the secondary bearing power control commands; and
each power control channel (305) includes at least (i) a magnetic bearing power control circuit (322) responsive to the magnetic bearing power control commands to selectively supply the magnetic bearing actuation power, (ii) a motor/generator power control circuit (318) responsive to the motor/generator power control commands to selectively supply power to, or draw power from, either the primary stator coil (345) or the secondary stator coil (347), and (iii) a secondary bearing power control circuit (324) responsive to the secondary bearing power control commands to selectively energize either the primary drive coil (363) or the secondary drive coil (365) of the secondary bearing actuator.

7. The system (100) of Claim 6, wherein:
the multi-channel processing module (302) is configured such that each processing channel (303) is at least partially in either an active mode or a standby mode;
the multi-channel power control module (304) is configured such that each power control channel (305) is at least partially in either an active mode or a standby mode;
one of the low level digital magnetic bearing controllers (312), one of the low level digital motor/generator controllers (308), and one of the low level digital secondary bearing controllers(314) in each processing channel (303) is in the active mode; and
one of the magnetic bearing power control circuits, one of the motor/generator (314) power control circuits (318), and one of the secondary bearing power control circuits in each power control channel (305) is in the active mode.

8. The system (100) of Claim 1, further comprising:
a gimbal frame (332);
a flywheel housing assembly (402) upon which the shaft is rotationally mounted, the flywheel housing assembly (402) rotationally mounted on the gimbal frame (332); and
a gimbal actuator (334) coupled between the gimbal frame (332) and the flywheel housing assembly (402), the gimbal actuator (334) including at least a primary drive coil (333) and a secondary drive coil (335), each gimbal actuator drive coil adapted to be selectively energized and operable, upon being energized, to cause the gimbal actuator (334) to move the flywheel housing assembly (402) relative to the gimbal frame (332),
wherein:
each processing channel (303) is further configured to selectively supply at least gimbal power control commands, and
each power control channel (305) is further coupled to receive the gimbal power control commands and is further operable, upon receipt thereof, to selectively energize either the primary drive coil (333) or the secondary drive coil (335) of the gimbal actuator (334).

9. The system (100) of Claim 8, wherein:
each processing channel (303) includes at least (i) a low level digital magnetic bearing controller (312) configured to selectively supply the magnetic bearing power control commands, (ii) a low level digital motor/generator controller (308) configured to selectively supply the motor/generator (342) power control commands, and (iii) a low level digital gimbal controller (306) configured to selectively supply the gimbal power control commands; and
each power control channel (305) includes at least (i) a magnetic bearing power control circuit (322) responsive to the magnetic bearing power control commands to selectively supply the magnetic bearing actuation power, (ii) a motor/generator power control circuit (318) responsive to the motor/generator power control commands to selectively supply power to, or draw power from, either the primary stator coil (345) or the secondary stator coil (347), and (iii) a gimbal power control circuit (316) responsive to the gimbal power control commands to selectively energize either the primary drive coil (333) or the secondary drive coil (335) of the gimbal actuator (334).

10. The system (100) of Claim 10, wherein:
the multi-channel processing module (302) is configured such that each processing channel (303) is at least partially in either an active mode or a standby mode;
the multi-channel power control module (304) is configured such that each power control channel (305) is at least partially in either an active mode or a standby mode;
one of the low level digital magnetic bearing controllers (312), one of the low level digital motor/generator controllers (308), and one of the low level digital gimbal controllers (306) in each processing channel (303) is in the active mode; and
one of the magnetic bearing power control circuits (322), one of the motor/generator power control circuits (318), and one of the gimbal power control circuits (316) in each power control channel (305) is in the active mode.
